# EUROPÄISCHE PATENTSCHRIFT

(11) **EP 3 911 791 B1**
(45) Veröffentlichungstag und Bekanntmachung des Hinweises auf die Patenterteilung: **27.05.2026**
(21) Anmeldenummer: 20700463.1
(22) Anmeldetag: 09.01.2020
(51) Int. Cl.: D04H 11/08, D04H 18/02, B60N 3/04, B60R 13/01

(54) **KRAFTFAHRZEUG-BODENVERKLEIDUNG, GEPÄCKRAUMVERKLEIDUNG ODER LADEBODENVERKLEIDUNG MIT STRUKTURGENADELTER TEPPICH-OBERFLÄCHE (II)**
MOTOR VEHICLE FLOOR COVERING, BOOT OR TRUNK COVERING OR LOAD COMPARTMENT COVERING HAVING A STRUCTURALLY NEEDLE-PUNCHED CARPET SURFACE (II)
REVÊTEMENT SOUS CAISSE DE VÉHICULE À MOTEUR, REVÊTEMENT DE COFFRE À BAGAGES OU REVÊTEMENT DE PLANCHER DE CHARGEMENT AVEC UNE SURFACE TAPIS DE STRUCTURE AIGUILLETÉE

(30) Priorität: 15.01.2019 DE 102019100919
(43) Veröffentlichungstag der Anmeldung: 24.11.2021
(73) Patentinhaber: Adler Pelzer Holding GmbH, 58099 Hagen (DE)
(72) Erfinder: FALK, Frank, 72459 Albstadt (DE); SCHULZE, Volkmar, 84069 Schierling (DE)
(74) Vertreter: Hannke Bittner & Partner mbB Regensburg
(86) Internationale Anmeldenummer: PCT/EP2020/050381
(87) Internationale Veröffentlichungsnummer: WO 2020/148147

(56) Entgegenhaltungen:
- EP-A1- 0 411 248
- EP-A1- 3 348 692
- WO-A1-2011/065851
- CN-A- 1 399 023
- DE-A1- 1 660 780
- DE-A1- 1 785 256
- DE-A1- 2 003 457
- DE-B3- 102018 101 321
- JP-A- S6 312 748
- US-A- 4 389 442
- DATABASE WPI Week 198809, 1988 Derwent World Patents Index; AN 1988-058995, XP002798465

## Beschreibung

Gegenstand der Erfindung ist ein Verfahren zur Herstellung einer dreidimensional geformten Bodenverkleidung, Gepäckraumverkleidung oder Ladebodenverkleidung für Kraftfahrzeuge, deren Teppich-Oberfläche sichtseitig eine genadelte Struktur aufweist sowie die Verkleidungen selbst.

Das Oberflächenmaterial für ein Kraftfahrzeug selbst ist ein Velours-Teppich, der mit mehreren Unterschichten versehen sein kann sowie eine Schaum- oder Faser-/Vlies-Isolation zur Karosserie hin, haben kann.

Insbesondere durch die Entwicklung von E-Kraftfahrzeugen sucht man im Design/Styling nach alternativen Lösungen in der verformbaren Teppichoberfläche, im Vergleich zum einfarbigen, glatten Flachnadelvlies-, Velours- und Tuftingteppich.

Bei Kraftfahrzeugen mit Hecktür (Kombis) und umklappbarer Rücksitzlehne trifft dieses Styling insbesondere auch auf den Gepäckraum zu, da bei geöffneter Hecktür und umgeklappten Rücksitzlehnen man von hinten in den damit freigegebenen Innenraum des Kraftfahrzeuges schaut. Beides, Gepäck- und Fahrgastraum, müssen dann ein einheitliches, in sich stimmiges Styling verkörpern.

Im Stand der Technik sind verschiedene Ausführungen von Teppich-Oberwaren bei Kraftfahrzeug-Bodenverkleidungen sowie Gepäckraumverkleidungen sowie Ladebodenverkleidungen bekannt, nämlich insbesondere Tufting-, Velours- und Flachnadelvlies-Teppiche.

Bei Tufting-Teppichen wird insbesondere PA6.6, PA6, PP, rPA und PET, rPET sowie die entsprechenden bio-basierenden Polyamide (PA 5.10; PA 6.10); und bei den Velours- und Flachnadelvlies-Teppichen PET, PET/PP, PP, PA/PET und rPET vorwiegend als Garn-/Fasermaterial eingesetzt.

Im Stand der Technik sind Verfahren zur Herstellung von Velours-Teppichen bekannt, siehe unter anderem DE 44 09 771 A1, DE 29 00 935 C2 und DE 10 2008 026 968 A1.

Ein Velours-Vlies ist ein veredeltes Nadelvlies, bei dem bei einem vorgefertigten Vliesmaterial mittels Vernadelung in ein laufendes homogenes Bürstenband, ein Faserpol erzeugt wurde. Wenn das dann noch auf definierte Flor-/Polhöhe geschoren ist, spricht man von einem Schervelours.

Ein Velours-Teppich unterscheidet sich von einem Nadelvlies-Teppich durch eine hochwertigere Optik und Haptik, sowie ein verbessertes Verschleißverhalten.

Zur Homogenisierung des Einstichbildes bei einem vernadelten Vlies sind in US 9 567 698 B2, US 2016/0069006 A1, US 9 260 806 B2, US 2015/0259836 A1 und EP 2 918 719 A1 spezielle Verfahren beschrieben. Bei der Herstellung eines flachen Nadelvlieses werden Stapelfasern nach einer Vliesbildung mittels Krempel und Kreuzleger über vielfaches Vernadeln zwischen zwei Metallplatten verfestigt. In einem weiteren Arbeitsschritt mittels nochmaliger Vernadelung in ein Bürstenband, kann aus diesem flachen Nadelvlies ein Veloursnadelvlies erzeugt werden. Bei beiden Varianten ist es für eine gute Endfestigkeit notwendig, die Stapelfasen nach dem Vernadeln thermisch oder chemisch einzubinden.

Die Einbindung der Fasern erfolgt größtenteils mittels geschäumten Latex oder Acrylat. Ein kombinierter Einsatz von Latex oder Acrylat und BiCo-Faser (coPET/PET-Bikomponentenfaser) ist in praxi ebenfalls üblich. Des Weiteren wird die Einbindung auch ausschließlich über BiCo-Faser realisiert.

Speziell in WO 2017/061970 A1 wird auf das Einbinden des Teppichs mittels Bikomponenten (BiCo)-Fasern eingegangen. Hier wird die Optimierung der (BiCo-)Faserfixierung durch den Einsatz spezieller Schlitzdüsen im Trockenofen beschrieben. Daneben sind bekannt: aufgestreutes PE, EVA/PE-Gemisch, auf-extrudiertes PE, Folien, Heißkleber, thermoplastische Dispersionen und das Thermobonding (EP 1 598 476 B1).

In der DE 2 008 439 C [US 3 755 055] wird ein Verfahren beschrieben, bei dem eine einfarbige oder melangierte Vliesstoffbahn und eine mit Pigmentfarbstoffen mit einem ornamentalen Muster ein- oder mehrfarbig einseitig bedruckte Vliesstoffbahn aufeinandergelegt werden, wobei die bedruckte Seite der einen Vliesstoffbahn der unbedruckten Vliesstoffbahn abgekehrt ist, und danach beide Vliesstoffbahnen von der unbedruckten Fläche her soweit durchgenadelt werden, dass sich die Fasern der unbedruckten Vliesstoffbahn mit den Fasern der bedruckten Vliesstoffbahn unter Bildung eines Flores auf deren bedruckter Fläche vermischen und deren aufgedrucktes ornamentales Muster zu einem weichen und dreidimensional wirkenden Muster verändert wird.

Die DE 39 04 526 A1 offenbart einen Bodenbelag und ein Verfahren zu seiner Herstellung. Zur Herstellung eines Bodenbelages aus zwei Schichten aus Nadelvlies, von denen die Oberschicht an ihrer Oberseite strukturiert ist, wird die Unterschicht von der Unterseite der strukturierten Oberschicht her in diese eingenadelt. Dabei ist die Nadeltiefe wesentlich geringer als die Stärke der Oberschicht. Durch das Zusammennadeln der beiden Schichten von der Rückseite der Oberschicht her wird die Struktur dieser Oberschicht nicht zerstört. Anschließend an das Zusammennadeln erfolgt ein zusätzliches Verbinden beider Schichten durch Imprägnieren mit einem Bindemittel durch die Oberschicht hindurch.

In EP 0 888 743 A1 [US 2002/0029445 A1, US 6 287 407 B1, US 6 398 895 B1] wird ein strukturiertes Textilmaterial aus mindestens zwei verschiedenen Basisvliesen für den Bereich Reinigungstextilien beschrieben. Die technische Lehre betrifft ein strukturiertes Textilmaterial aus mindestens zwei verschiedenen vernadelten Basisvliesen, wobei die Basisvliese eine durch Nadelung von mindestens einer Seite erhaltene Struktur aufweisen, wobei die zur Strukturnadelung verwendeten Nadeln Gabel- oder Kronennadeln sind und die Tiefe der Gabeln beziehungsweise der Bärte so gewählt ist, dass sich diese beim Durchstich vollständig mit Fasern des den Nadeln zugewandten Basisvlieses füllen und wobei das Textilmaterial im Muster, im Fond und auf der Rückseite unvermischte, reine Fasern aufweist. Im Verfahren zur Herstellung des strukturierten Textilmaterials wird zum einen angeführt, dass eine Kaschierung der beiden Schmelzfasern aufweisenden vernadelten Basisvliese ohne Aktivierung der Schmelzfasern erfolgt, dass anschließend eine ein- oder zweiseitige Strukturnadelung erfolgt, und dass die Schmelzfasern der Basisvliese nach der Strukturnadelung aktiviert werden; und zum anderen, dass vor dem Einlauf in eine Strukturnadelmaschine zwischen die beiden Schmelzfasern aufweisenden vernadelten Basisvliese eine Zwischenlage aus einem eine Klebung der beiden Basisvliese vermögenden Werkstoffe, insbesondere ein Klebevlies, eingebracht wird, dass die beiden Basisvliese und die Zwischenlage miteinander einer ein- oder zweiseitigen Strukturnadelung unterworfen werden, und dass anschließend die Verbindung der beiden Basisvliese und der Zwischenlage durch Aktivierung der Schmelzfasern und der Zwischenlage hergestellt wird.

In WO 2011/045691 A1 wird ein graphischer Veloursteppich und dessen Herstellung beschrieben. Anwendung finden hierbei zwei Strukturierungsmaschinen besetzt mit jeweils 2 Nadelbrettern; und ein Basis- und einen Obervliesstoff. Das Basisvlies wird zwischen den zwei Strukturierungsmaschinen auf das Obervlies zugeführt und in der zweiten Strukturierungsmaschine zu einem Vlies vernadelt. Die Nadeln in den Nadelbrettern sind nach vorbestimmten Mustern angeordnet. Auf das Basisvlies ist ein Klebstoff aufgebracht, der dann die Fasern der Vliesschichten fixiert/einbindet.

Weiterhin ist bekannt, Muster in einer Nadelfilzbahn mittels mehrerer Komponenten, Faserschichten und mehrerer Nadelungsvorgänge zu erzeugen, siehe u.a. DE 103 46 473 A1 und WO 2011/065851 A1.

In der DE 20 2009 000 775 U1 wird ein Faserflächengebilde dargelegt, das aus einem Nadelvliesstoff bzw. Faserflor (Oberflächenschicht) auf der Sichtseite und einem Faserflor bzw. Faservlies (Musterschicht), welche durch Vernadelung mittels unterschiedlicher Nadeltypen/Nadelarten und/oder Nadelanordnungen und/oder Einstichrichtungen und/oder Einstichtiefen miteinander verbunden sind, besteht. Die Musterschicht ist vorbearbeitet, die Musterschicht unterscheidet sich von der Oberflächenschicht in den Fasern selbst und der Faserfärbung; auch ist die Musterschicht vor dem Vernadeln mit der Oberflächenschicht ausgestanzt und/oder ausgeschnitten worden; sowie ist gefärbt und/oder bedruckt. Des Weiteren werden mehrere unterschiedliche Musterflore bzw. Mustervliese als Musterschicht eingesetzt. Die Oberflächenschicht ist rückvernadelt und oberflächenbehandelt.

Weitere relevante Informationen finden sich in den Dokumenten CN 1 399 023 A, JP S63 12748 A, EP 0 411 248 A1 und DE 10 2018 101321 B3.

Alle im Stand der Technik beschriebenen, "strukturgenadelten" Anwendungen, Verfahren und Vorrichtungen sowie Materialstrukturen, betreffen nicht (einlagige) Flachnadelvlies- oder Velours-Teppiche für die Nutzung im Kraftfahrzeug, deren dreidimensionale Verformung zu Kraftfahrzeug-Bodenverkleidungen, Gepäckraumverkleidungen oder Ladebodenverkleidungen. Es wird nicht von einer zerstörungsfreien Struktur berichtet, die bei einer dreidimensionalen Verformung im Kontaktheizfeld (Kaschierpresse), Strahlerheizfeld und im Verformungswerkzeug selbst ihre Oberflächenstruktur strapazierfähig behält.

Die Aufgabe der vorliegenden Erfindung gegenüber dem vorgenannten Stand der Technik ist somit die Bereitstellung eines verformungsgerechten, strukturgenadelten Teppichs, der den Fahrgast- und/oder Gepäckraum und/oder Laderaum von Kraftfahrzeugen dahin aufwertet, dass dieser eine "Wohnzimmer-/ Wohlfühl-Atmosphäre" aufweist. Insbesondere ist es Aufgabe der Erfindung bei der Herstellung von Velours-Teppich bzw. der Veloursisierung von Nadelvlies-Teppich ein bleibendes, strapazierfähiges Oberflächenmuster mit einer gegebenenfalls dreidimensionalen Struktur einzubringen, das über die Breite der Teppich-oberfläche unterschiedlich strukturiert ist und einer dreidimensionalen Verformung zu einer Kraftfahrzeug-Boden- oder Gepäckraumverkleidung standhält.

Gegenstand der vorliegenden Erfindung ist gemäß Verfahrensanspruch 1 ein Verfahren zur Herstellung eines dreidimensional verformbaren Velours-Teppichs für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 300 g/m² bis 700 g/m², das dadurch gekennzeichnet ist, dass man zwei oder mehrere Nadeltypen unterschiedlicher Länge segmentweise über die Breite eines Nadelbrettes anordnet, bei einer definierten Einstellung der Einstichtiefe sowie einer definierten Einstellung der Einstichdichte den strukturierten Velours-Teppich aus einem Ausgangsvlies durch Vernadelung herstellt, und den Velours-Teppich mit einer oder mehreren Unterschichten versieht und verformt, wobei Nadeln eingesetzt werden, die sich durch unterschiedliche Länge, Feinheit, Gabelöffnung und der Gabelorientierung unterscheiden.

Kern der vorliegenden Erfindung ist somit die Bereitstellung eines, in einem üblichen Standardverfahren hergestellten, Velours-Teppichs für eine Bodenverkleidung, eine Gepäckraumverkleidung oder eine Ladebodenverkleidung eines Kraftfahrzeuges mit strukturgenadelter, verformungsgerechter Sichtoberfläche allein durch die Anordnung von unterschiedliche langen Nadeltypen über die Breite des Nadelbrettes und/oder der Nadelbretter die zur Vernadelung bzw. Veloursisierung des Teppichs für eine Bodenverkleidung, eine Gepäckraumverkleidung oder eine Ladebodenverkleidung eines Kraftfahrzeuges genutzt werden. Die Bestückung der Nadelbretter über die Breite erfolgt dabei mit vorab definierten Nadeltypen/-geometrien, nämlich der Nadellängen, die somit eine vorabbestimmte gegebenenfalls dreidimensionale Struktur der Velours-Oberfläche erzeugen. In einer besonders bevorzugten Ausführungsform werden Nadeltypen segmentweise eingesetzt, die sich neben der Länge auch in weiteren Parametern, wie beispielsweise der Feinheit, der Gabelöffnung und der Gabelorientierung unterscheiden können.

Der Vorteil der vorliegenden Erfindung besteht in der Bereitstellung eines verformungsgerechte/-stabilen, strukturgenadelten Velours-Teppichs für die Herstellung von Kraftfahrzeug-Bodenverkleidung, Gepäckraumverkleidungen oder Ladebodenverkleidung ohne einen zusätzlichen Arbeitsschritt bei dessen Herstellung im Vergleich zur Standard-Velours-Teppich-Produktion.

Das Verfahren der vorliegenden Erfindung ist umsetzbar -ohne zusätzliche Vliesschichten, Vernadelungsstufen, Nadelmaschinen bzw. Nadelbretter- in "Standard"-Anlagen allein durch die Nadelgeometrie/Nadeltype, der Nadellänge der über die Breite des Nadelbrettes angeordneten Nadeln.

Eine weitere Ausführungsform der vorliegenden Erfindung besteht in einem dreidimensional geformten Velours-Teppich für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 300 g/m² bis 700 g/m², weiterhin umfassend eine oder mehrere Unterschichten, wobei die Sichtseite des Velours-Teppichs eine strukturgenadelte, strapazierfähige Oberfläche aufweist.

Die Realisierung soll zum einen bei einem einlagigen und zum anderen bei einem zweilagigen Velours-Teppich erfolgen. Bei einer zweilagigen Ausführung können hierbei zusätzlich Farbeffekte unterschiedlicher Struktur eingenadelt werden.

### Ausführungsbeispiel:

Zur Herstellung eines verformungsgerechtem/-stabilen, strukturgenadeltem Velours-Teppichs wurde als Ausgangsvlies ein Vorvlies aus einem Faser-Mix bestehend aus 60% handelsübliche 12 dtex Fasern, Faserlänge 60 mm, 30% handelsübliche 17 dtex Fasern, Faserlänge 69 mm und 10% handelsübliche 4,4 dtex Fasern, Faserlänge 51 mm (BiCo),
genutzt. Das Flächengewicht betrug 615 g/m².

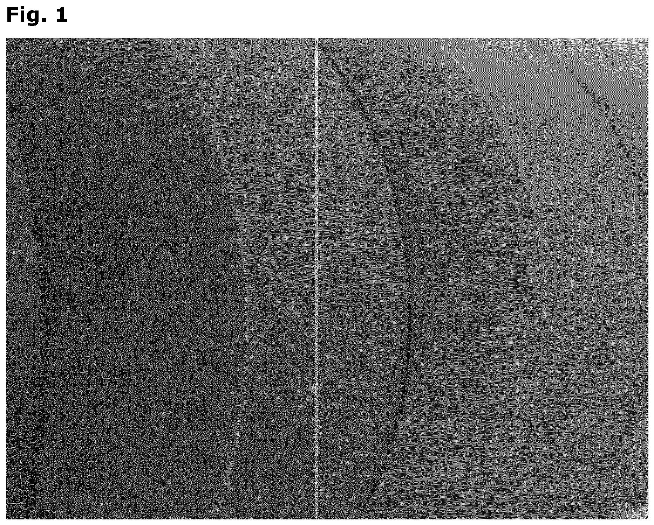

Die unterschiedlich langen Gabelnadeln der Firma Groz-Beckert KG 15X16X20X40X73,0 D G 9077 / 616751 [Länge: 74,8 mm] und 15X17X32X40X74,8 D G 9077 / 615921 [Länge: 76,6 mm] sind in einem Nadelbrett der Velours IV (8000 n/lm), abwechselnd in 20 cm breiten Streifen eingebaut worden. Der Nullabgleich der Maschine wurde auf die längere der beiden Nadeln abgestimmt. Bei der Herstellung war es wichtig, seitens der Maschineneinstellungen, die optimale Einstichtiefe und die optimale Einstichdichte durch Austesten zu finden. Bei dem in Fig. 1 dargestellten Velours-Teppich betrug die Einstichdichte 650 st/cm2 und die Einstichtiefe 5 mm.

Der so hergestellte strukturgenadelte Velours-Teppich wurde anschließend mit 80 g/m² Latex eingebunden; und mit 80 g/m² PE beschichtet. Anschließend wurde der Velours-Teppich mit einem Folienvlies 150 g/m² zu einer Bodenverkleidungs-Oberware eines Mittelklasse-Fahrzeuges bei den Prozeßparametern Kontaktheizfeld 170°C, 58sec; Strahlerheizfeld 140°C und einer Werkzeugschließzeit von 66sec bei der Werkzeugoberflächentemperatur von 7°C verformt.

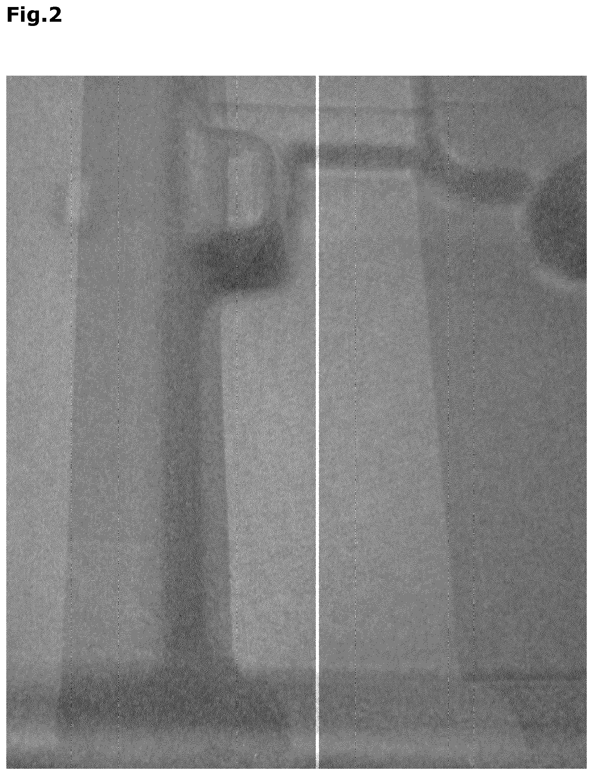

In Fig. 2 ist ein Ausschnitt der verformten Bodenverkleidungs-Oberware dargestellt. Deutlich ist die Strukturierung zu erkennen. Speziell in Fig. 2 ist zu erkennen, dass die Strukturnadelung des Teppichs verformungsgerecht und verformungsstabil ist.

## Patentansprüche

1. Verfahren zur Herstellung eines dreidimensional verformbaren Velours-Teppichs für eine Bodenverkleidung, eine Gepäckraumverkleidung oder Ladebodenverkleidung eines Kraftfahrzeuges mit strukturgenadelter, verformungsstabiler Oberfläche mit einer Grammatur des Teppichs im Bereich von 300 g/m² bis 700 g/m²,
**dadurch gekennzeichnet, dass**
man mehrere Nadeltypen unterschiedlicher Länge segmentweise über die Breite eines Nadelbrettes anordnet, bei einer definierten Einstellung der Einstichtiefe sowie einer definierten Einstellung der Einstichdichte den strukturierten Velours-Teppich aus dem Ausgangsvlies durch Vernadelung herstellt, und den Velours-Teppich mit mehreren Unterschichten versieht und verformt, wobei
Nadeln eingesetzt werden, die sich durch unterschiedliche Länge, Feinheit, Gabelöffnung und der Gabelorientierung unterscheiden.

2. Dreidimensional geformter Velours-Teppich, welcher mit dem Verfahren gemäß Anspruch 1 hergestellt wird.

## Claims

1. A method for the production of a three-dimensionally deformable velour carpet for a floor panelling, a luggage compartment panelling or a load floor panelling of a motor vehicle with a structurally needled, deformation-resistant surface having a grammage of the carpet in the range from 300 g/m² to 700 g/m²,
**characterised in that**
more needle types of different lengths are arranged in segments across the width of a needle board, with a defined setting of the penetration depth as well as a defined setting of the penetration density, the structured velour carpet is produced from an initial nonwoven by needling, and the velour carpet is provided with one or more underlayers and deformed, wherein
needles are used which differ in length, fineness, fork opening and fork orientation.

2. Three-dimensionally shaped velour carpet produced with the method according to claim 1.

## Revendications

1. Procédé de fabrication d'un tapis en velours déformable en trois dimensions pour un revêtement de sol, un revêtement de coffre à bagages ou un revêtement de plancher de chargement d'un véhicule automobile avec une surface structurée aiguilletée, indéformable, avec un grammage du tapis compris entre 300 g/m² et 700 g/m²,
**caractérisé en ce que**
on dispose plusieurs types d'aiguilles de différentes longueurs par segments sur la largeur d'une planche à aiguilles, on fabrique la moquette velours structurée à partir du non-tissé de départ par aiguilletage, avec un réglage défini de la profondeur de pénétration et un réglage défini de la densité de pénétration, et on munit la moquette velours de plusieurs sous-couches et on la déforme, dans lequel
des aiguilles sont utilisées qui se distinguent par leur longueur, leur finesse, l'ouverture de leur fourche et l'orientation de leur fourche.

2. Tapis en velours de forme tridimensionnelle, fabriqué selon le procédé selon la revendication 1.
